# EUROPEAN PATENT APPLICATION

(11) **EP 1 650 731 A2**
(43) Date of publication of application: **26.04.2006**
(21) Application number: 05076951.2
(22) Date of filing: 25.08.2005
(51) Int. Cl.: G09F 9/33

(54) **Display element and mechanical mounting interface used therein**

(30) Priority: 07.10.2004 US 616200 P
(71) Applicant: Barco, naamloze vennootschap., 8500 Kortrijk (BE)
(72) Inventor: Thielemans, Robby, 9810 Nazareth (BE); De Keukeleire, Steven, 9800 Deinze (BE); Van Hille, Herbert, 85737 Ismaning (DE); Meersman, Karim, 8610 Kortemark (BE)
(74) Representative: Donné, Eddy

(57) **Abstract**

A display element consisting of a display panel on which one or more lighting modules are fastened, wherein said display element further comprises a mechanical mounting interface for fastening said lighting module to said display panel.

## Description

### BACKGROUND OF THE INVENTION

### 1. Field of the Invention

The present invention relates to a mechanical mounting interface for a lighting display module and complimentary mechanical panel or frame for use in large-scale display applications. In particular, the present invention relates to an interchangeable mounting mechanism for quickly installing, maintaining, and disassembling LED, OLED or other emissive modular large-scale display.

### 2. Discussion of the Related Art

Conventional incandescent lamps, fluorescent lamps, and neon tubes have long been used to illuminate many large-scale commercial and public signs. However, the market is now demanding cheaper and larger displays that have the flexibility to customize display sizes and colors, that have image and video capability, and that are easy to install, maintain, and disassemble, especially for use in temporary venues; these are market specifications that are not possible with the older technologies. As a result, many displays now utilize emissive lighting modules, such as light emitting diodes (LEDs), or organic light emitting diodes (OLEDs) or other emissive display technologies.

The emissive display modules are more advantageous than conventional lighting modules, because they consume less power and possess a much longer lifetime and have lower maintenance costs. Therefore, there exists a need to minimize manufacturing and parts costs in large-scale display production.

Emissive display technologies are currently being applied to modular large-scale display applications, such as outdoor or indoor stadium displays, large marketing advertisement displays, and mass public informational displays. However, these large-scale displays are not always designed from the standpoint of easy and prompt installation or maintenance and, at best, ready access is often considered late in the execution of the design. Replacing worn emissive lighting modules, for example, often requires the laborious removal of a generous number of fasteners, such as screws, nuts, bolts, clips, or the like. Thus, there exists a need to provide lighting modules that can be quickly fastened or removed.

An example of a configurable large-scale display is found in reference to U.S. Patent No. 6,314,669, entitled "Sectional display system." The '669 patent details readily accessible access to internally located modular display and other components for quick change-out of modular and other components. However, the '669 patent fails to provide a means of easily replacing worn emissive lighting modules. The '669 patent also requires that the emissive lighting modules be of a uniformly designed fastening mechanism. This can be problematic for companies that are constantly updating their hardware in an attempt to stay competitive in today's market place. Thus, there exists a need to provide lighting modules that can be mechanically fastened to a hardware frame by means of a number of different mechanical interfaces.

### SUMMARY OF THE INVENTION

It is therefore an object of this invention to minimize manufacturing and parts costs in large-scale display production.

It is another object of this invention to provide lighting modules that can be quickly fastened or removed.

It is yet another object of this invention to provide lighting modules that can be mechanically fastened to a hardware frame by means of a number of different mechanical interfaces.

The present invention relates to a display element consisting of a display panel on which one or more lighting modules are fastened, wherein said display element farther comprises a mechanical mounting interface for fastening said lighting module to said display panel.

In particular, the present invention relates to an interchangeable mounting mechanism for quickly installing, maintaining, and disassembling LED, OLED or other emissive modular large-scale display.

The present invention also relates to a mechanical mounting interface for fastening a lighting module to a display panel for use in said display element.

### BRIEF DESCRIPTION OF THE DRAWINGS

In order to better explain the characteristics of the invention, the following preferred embodiments of a mechanical mounting interface according to the invention for a lighting display module, are described as an example only without being limitative in any way, with reference to the accompanying drawings, in which:
figures 1A and 1B illustrate an emissive lighting module;
figure 2 illustrates a display panel system;
figure 3 illustrates a fixed with bolts attachment system;
figures 4A 4B, and 4C illustrate a standard click-in attachment apparatus;
figures 5A, 5B, 5C, and 5D illustrate a click-in with front access attachment apparatus;
figures 6A, 6B, 6C, 6D, 6E, and 6F illustrate a single lever attachment apparatus;
figures 7A, 7B, and 7C illustrate a single lever with front access attachment system;
figures 8A, 8B, 8C, 8D, and 8E illustrate a push to close - push to open attachment system;
figures 9A and 9B illustrate a pin attachment system;
figure 10 illustrates a magnetic attachment system;
figures 11A and 11B illustrate a velcro attachment system;
figure 12 illustrates a suction cup attachment system;
figures 13A and 13B illustrate a standard slide rail attachment system;
figures 14A and 14B illustrate a rail mount attachment system;
figures 15A, 15B, and 15C illustrate a steel wire and bracket attachment system;
figure 16 illustrates a steel bar attachment system.

### DESCRIPTION OF SOME PREFERRED EMBODIMENTS

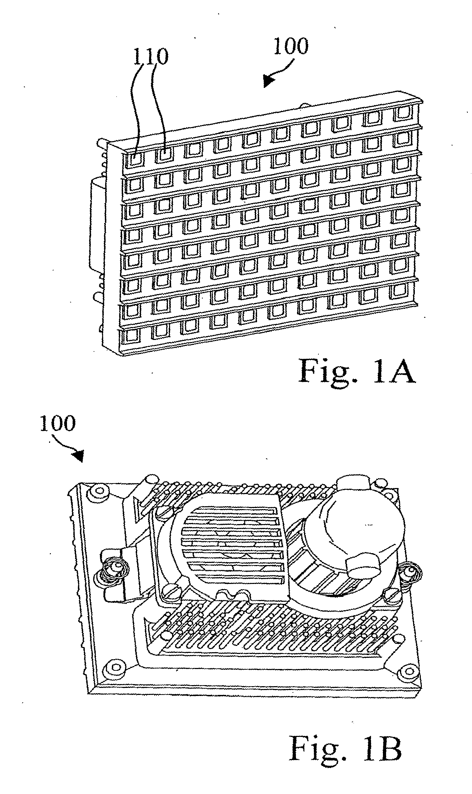

Figure 1A illustrates a left perspective view of an exemplary lighting module 100. Lighting module 100 contains a 8 x 11 array of emissive lighting elements 110; however, is not limited to a 8 x 11 array; the emissive lighting elements may come in any array size formed of any module size. Lighting module 100 is approximately 84 millimeters (mm) high by 112 mm wide by 50 mm deep; however, it is not limited to these dimensions. Lighting module 100 is designed for large-scale modular displays.

Figure 1B illustrates a rear right perspective view of lighting module 100.

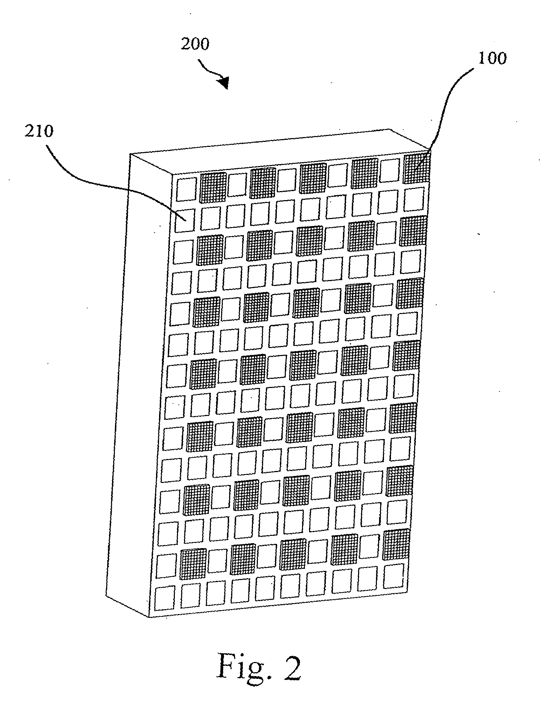

Figure 2 illustrates an exemplary display panel system. Display panel system 200 is formed of a 10 x 15 array of display panel slots 210, but is not limited to the 10 x 15 array size. Lighting modules 100 are placed in display panel slots 210 as desired.

Display panel system 200 is designed to be placed adjacent to any number of other display panels 200 in order to create a large-scale display (not shown).

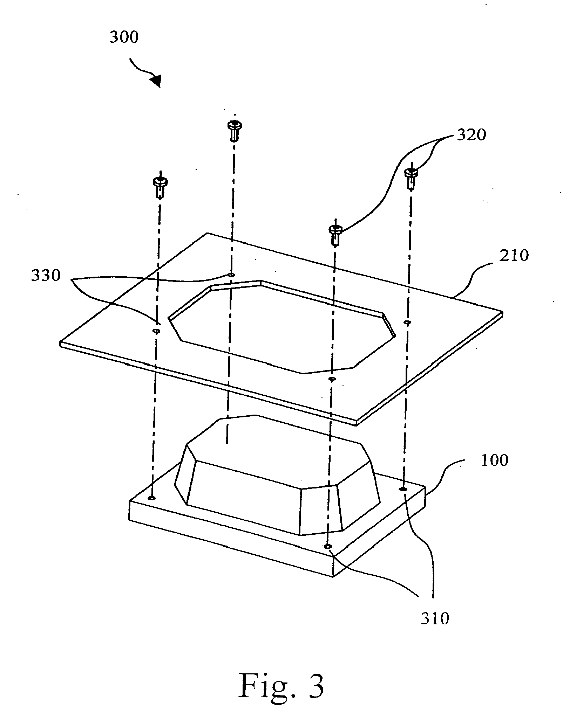

Figure 3 illustrates an exemplary fixed with bolts attachment system 300 with lighting module 100, display panel slot 210, bolts 320, and holes 330.

Lighting module 100 fits into display panel slot 210 and is fastened with bolts 320, which are screwed into the threaded holes 310. Fixed with bolts system 300, as shown in Figure 3, is not limited to four bolts 320 and four holes 330, but may contain any number of bolts and holes.

Lighting module 100 is unfastened from display panel slot 210 by the user's unscrewing bolts 320. Fixed with bolts system 300 represents a more permanent lighting module 100 for display panel 210 fixture, compared to the following examples, which illustrate temporary, quick-assembly mechanical interfaces.

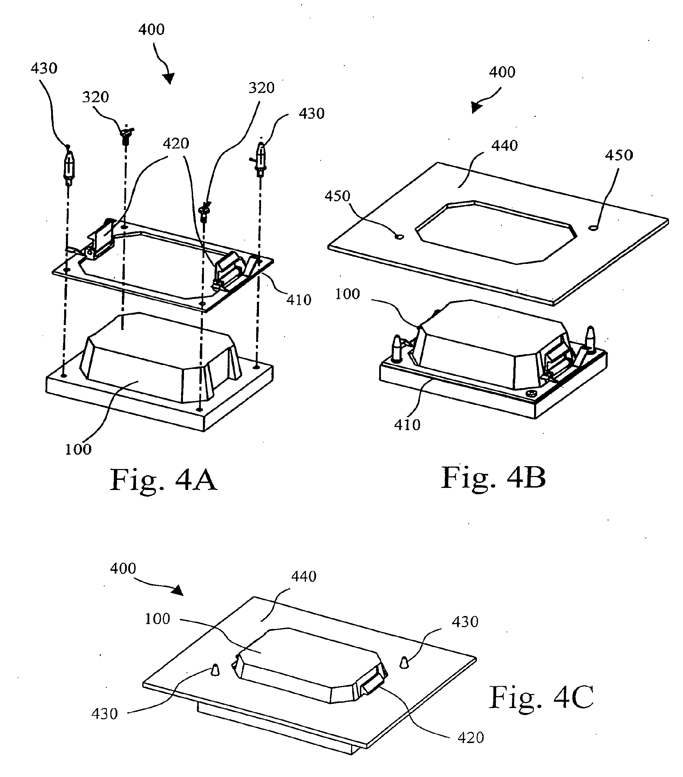

Figure 4A illustrates a system for fastening a lighting module 100 to a display panel 440, which system is in this case an exemplary standard click-in attachment system 400, with lighting module 100 and a mechanical mounting interface such as a standard click-in attachment apparatus 410 formed of click-in latches 420, bolts 320 and dowels 430.

Figure 4B illustrates said exemplary standard click-in attachment system 400 with lighting module 100, standard click-in attachment apparatus 410 and said display panel slot 440 with dowel holes 450.

Standard click-in attachment apparatus 410 is connected to lighting module 100 by bolts 320 and by dowels 430, as shown in figures 4A and 4B.

As represented in figure 4C said latches 420 can cooperate with the inner edges of said slots 440 by clicking behind them.

The lighting module 100 can be unfastened from said display panel slot 440 by the user's squeezing both click-in latches 420 horizontally towards one another, thereby releasing their hold on display panel slot 440 and allowing removal of lighting module 100.

Figure 5A illustrates a rear perspective view of an exemplary click-in with front access attachment system 500 whereby the latches 420 of said standard click-in attachment apparatus 410 are hinge-mounted with one end on a lighting module 510; whereby they are provided with a rim projecting from said; hinge-mounted end; and whereby said lighting module 510 is provided with, in this case, threaded holes 530 in front of said rims.

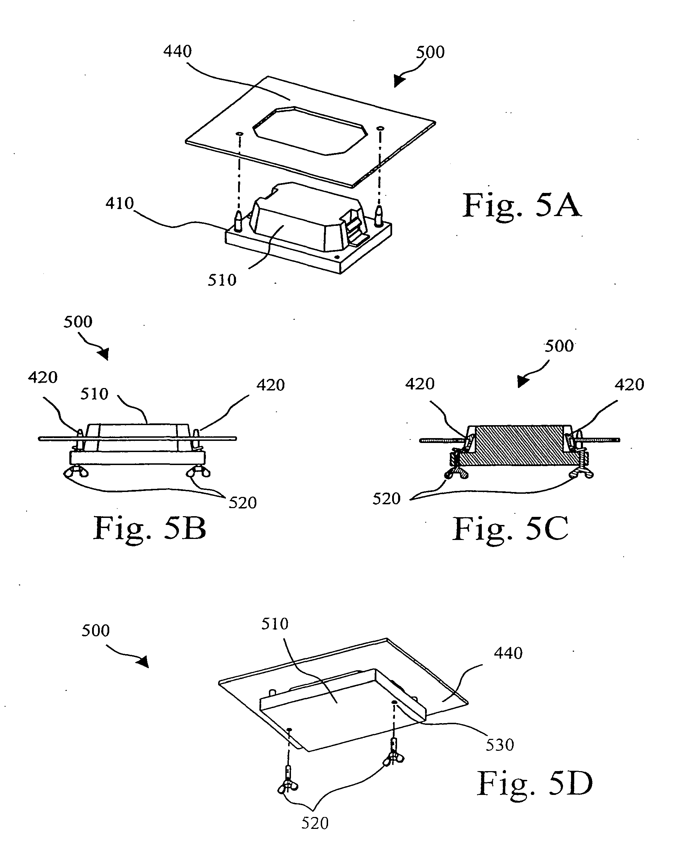

Figure 5B illustrates a side view of click-in with front access attachment system 500, whereby butterfly bolts 520 are used to access the rims of said latches 420.

Figure 5C illustrates a sectional view of click-in with front access attachment system 500.

Figure 5D illustrates a front perspective view of click-in with front access attachment system 500.

In operation, standard click-in attachment apparatus 410 with lighting module 510 is connected to display panel slot 440, as illustrated in Figure 5A.

To release standard click-in attachment apparatus 410 with lighting module 510 from display panel slot 440, use can be made of, for example, butterfly bolts 520 that are screwed in the threaded holes 530, whereby the bolts release both click-in latches 420, as illustrated in figure 5C.

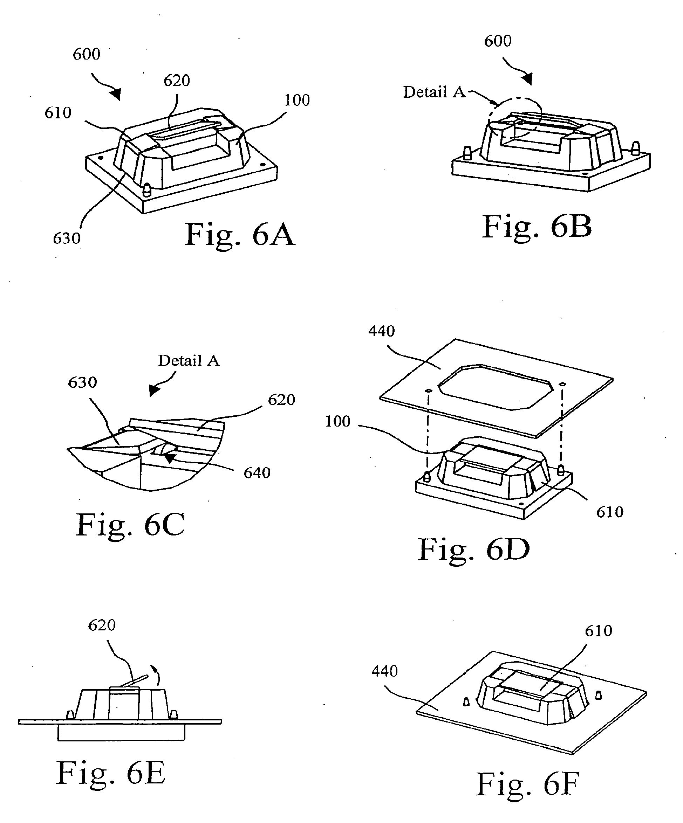

Figure 6A illustrates a left perspective view of an exemplary single lever attachment system 600 whereby said mechanical mounting interface consists of a single lever attachment apparatus 610 attached to lighting module 100, the single lever attachment apparatus being provided with a single lever 620, and a single lever latch 630, said lever 620 being hinge-mounted on said lighting module 100.

Figure 6B illustrates a right perspective view of single lever attachment system 600.

Figure 6C illustrates detail A of Figure 6B with a pawl 640, co-operating with a rim of said latch 630.

Figure 6D illustrates a left perspective view of lighting module 100 with single lever attachment apparatus 610 attached to display panel slot 440.

Figure 6E illustrates a side perspective view of single lever attachment system 600 with single lever 620.

Figure 6F illustrates a left perspective view of single lever attachment system 600 with single lever attachment apparatus 610 attached to display panel slot 440.

In operation, lighting module 100 with single lever attachment apparatus 610 attaches to display panel slot 440, as shown in Figures 6D and 6F. To release lighting module 100 and single lever attachment apparatus 610 from display panel slot 440, the user pulls up single lever 620, which causes pawl 640 to release single lever latch, 630 as shown in figures 6C and 6E.

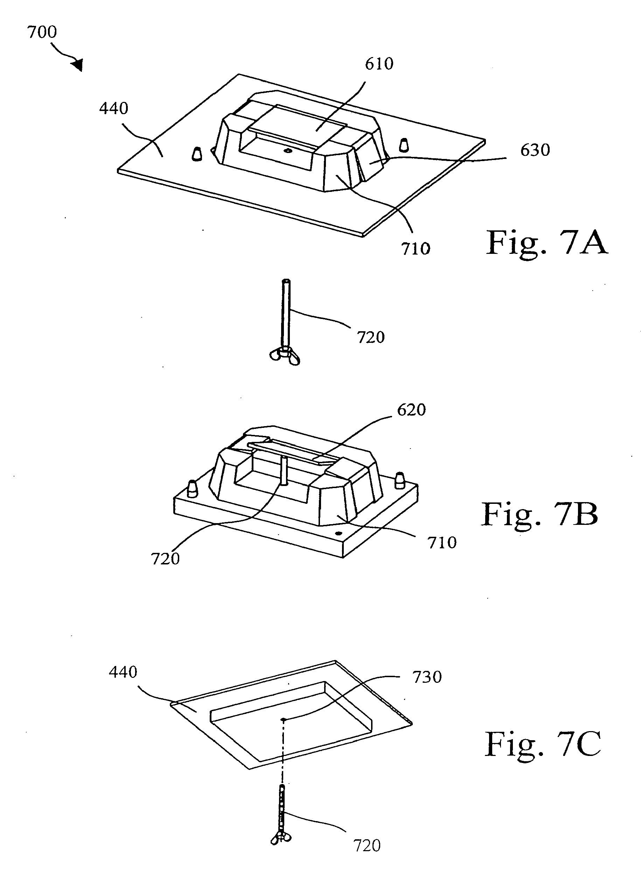

Figure 7A illustrates a rear left perspective view of an exemplary single lever with front access attachment system 700 with display panel slot 440, single lever attachment apparatus 610, single lever latch 630, a lighting module 710, and for example, a butterfly bolt 720.

Figure 7B illustrates a rear left perspective view of single lever 620, of front access attachment system 700, with butterfly bolt 720 opening single lever 620.

Figure 7C illustrates a front left perspective view of single lever 620, of front access attachment system 700, with butterfly bolt 720.

Lighting module 710 is lighting module 100 with a hole drilled for butterfly bolt 720. In operation, single lever attachment apparatus 610 with lighting module 710 is connected to display panel slot 440, as illustrated in figure 7A. To release single lever attachment apparatus 610 with lighting module 710 from display panel slot 440, butterfly bolt 720 is screwed into threaded hole 730, whereby the bolt opens single lever 620 and causes single lever latch 630 to open, as illustrated in Figures 7B and 7C.

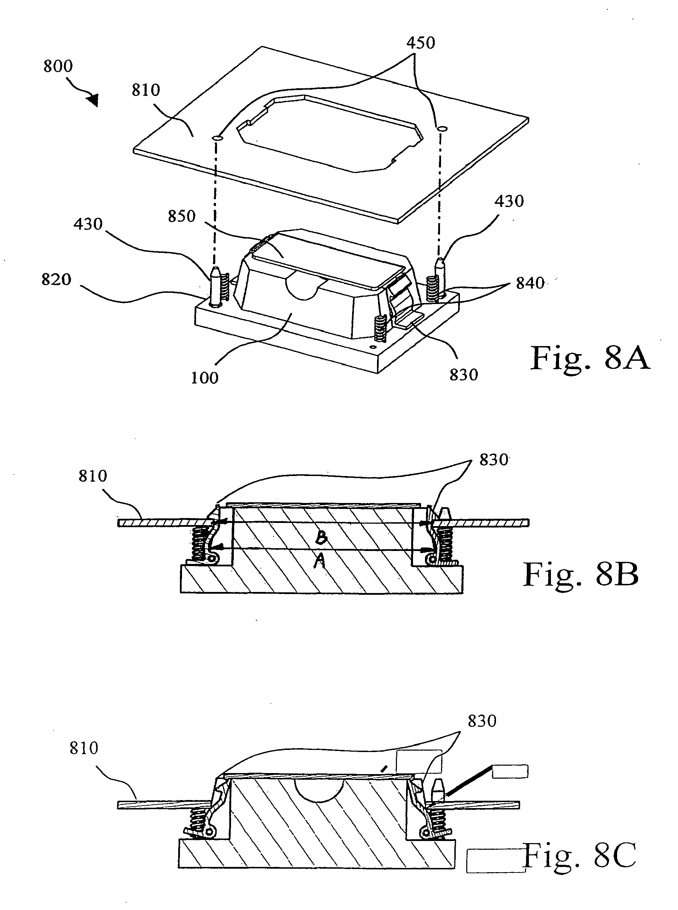

Figure 8A illustrates an exemplary push to close - push to open attachment system 800 with lighting module 100, a display panel slot 810, dowel holes 450 and a mechanical mounting interface.

Said mounting interface being a push to close - push to open attachment apparatus 820, formed of push to close - push to open latches 830, dowels 430, springs 840 and a lever 850.

It is remarked that in this case, said latches 830 are bent inwardly to the lighting module 100, such that the distance A between the hinge-mounted ends of two corresponding latches 830 is larger than the distance B between the two corresponding inner edges of the slot 810.

Figure 8B illustrates a sectional side view of push to close - push to open attachment system 800 in a closed state with display panel slot 810 and two push to close - push to open latches 830.

Figure 8C illustrates a sectional side view of push to close - push to open attachment system 800 in an open state with display panel slot 810 and push to close - push to open latches 830.

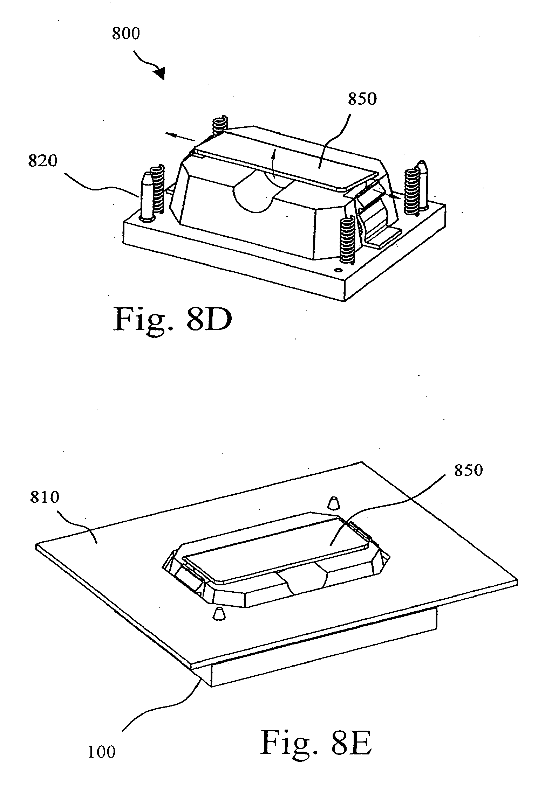

Figure 8D illustrates push to close - push to open attachment system 800 with push to close - push to open attachment apparatus 820 and lever 850 extended in a mode to release push to close - push to open latches 830.

Figure 8E illustrates push to close - push to open attachment system 800 in a closed state with display panel slot 810, lever 850, and lighting module 100.

In operation, push to close - push to open attachment apparatus 820 with lighting module 100 is connected to display panel slot 810, as illustrated in figure 8A.

To release push to close - push to open attachment apparatus 820 with lighting module 100 from display panel slot 810, the user pushes the lighting module 100 towards the display panel slot 810, as illustrated in figure 8C, whereby the latches are pushed towards the lighting module 100 until the free end of said latches 830 cooperate with said lever 850, thereby maintaining their hinged position.

After removal of the lighting modules, the user pulls lever 850 to place the push to close - push to open latches back in the position that allows attachment in display panel slot 810, as illustrated in figure 8D.

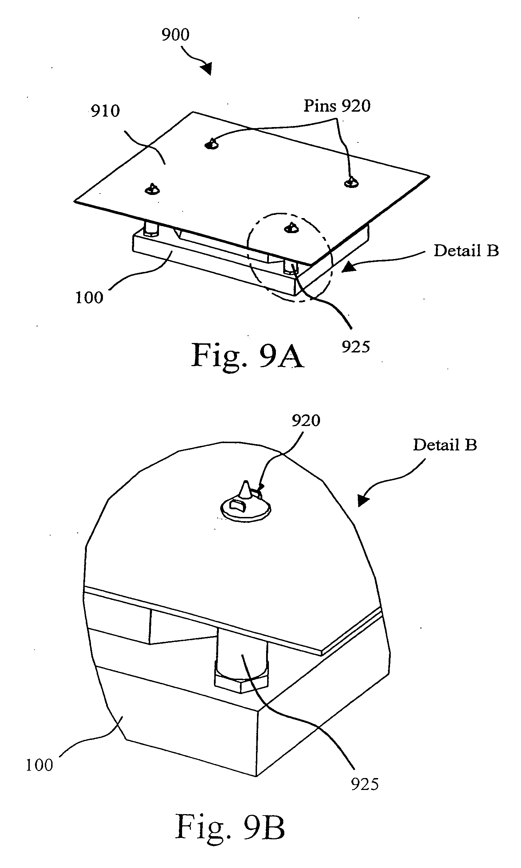

Figure 9A illustrates an exemplary pin attachment system 900 with lighting module 100 including a back plate attachment apparatus 910, pins 920, and needle like bolts 925. Example materials for forming back plate attachment apparatus 910 may be fabric, cloth, plastic, or metal.

Back plate attachment apparatus 910 is exemplary and is not limited to four pins 920 and four needle like bolts 925; however, back plate attachment apparatus 910 may have any number of desired pins and needle like bolts.

Figure 9B illustrates detail B of Figure 9A and shows a pin 920 fastened to back plate attachment apparatus 910.

In operation, the back plate attachment apparatus 910 is fastened to lighting module 100 with pins 920 that make contact with the needle bolts 925, as illustrated in Figures 9A and 9B. To release, pins 920 are removed from back plate attachment apparatus 910, and lighting module 100 can be released.

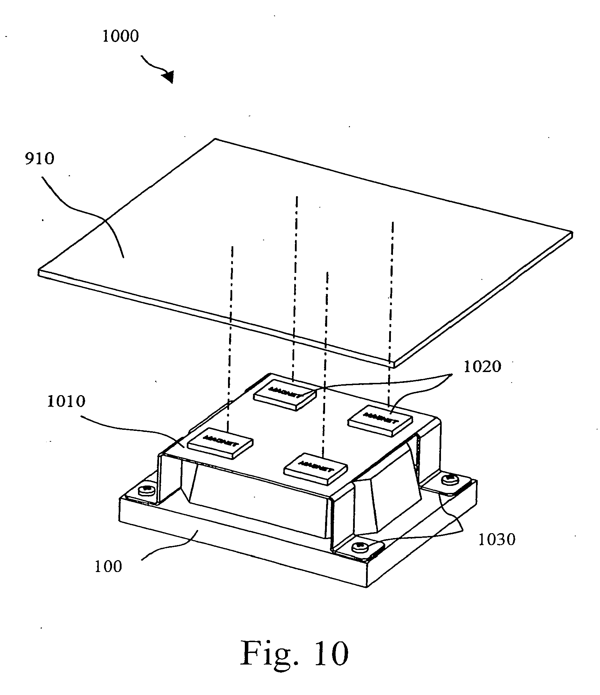

Figure 10 illustrates an exemplary magnetic attachment system 1000 with lighting module 100, back plate attachment apparatus 910, and a mechanical mounting interface 1010 consisting of magnets 1020 and screws 1030. In this example, back plate attachment apparatus 910 is formed of metal. Magnetic attachment system 1000 is exemplary and is not limited to four magnets 1020 and four screws 1030, but may have any number of desired magnets and screws.

In operation, lighting module 100 is provided with said mechanical mounting interface, formed by a generic module mechanical interface attachment apparatus 1010, as illustrated in figure 10.

The generic module mechanical interface attachment apparatus 1010 with lighting module 100 is then magnetically fastened to metallic back plate attachment apparatus 910, as illustrated in Figure 10.

To release lighting module 100 from metallic back plate attachment apparatus 910, generic module mechanical interface attachment apparatus 1010 with lighting module 100 is removed from back plate attachment apparatus 910.

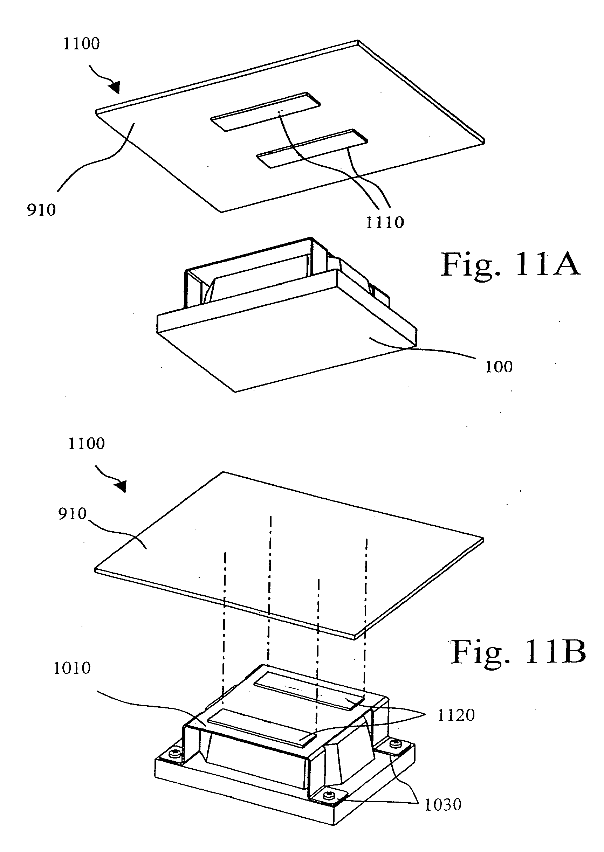

Figure 11A illustrates an exemplary velcro attachment system 1100 with a mechanical mounting interface consisting of a generic module mechanical interface attachment apparatus 1010, and a back plate attachment apparatus 910 with velcro strips 1110.

Figure 11B illustrates a rear perspective view of velcro attachment system 1100, with complementary velcro strips 1120, and screws 1030. Generic module mechanical interface attachment apparatus 1010 and velcro strips 1110 are exemplary and are not limited to two velcro strips 1120 and four screws 1030, but may have any number of desired velcro strips and screws.

In operation, two velcro strips 1110 are fastened to back plate attachment apparatus 910, as illustrated in Figure 11A.

Lighting module 100 is fastened to generic module mechanical interface attachment apparatus 1010, as illustrated in Figure 11B. Two velcro strips 1120 are fastened to generic module mechanical interface attachment apparatus 1010, as illustrated in Figure 11B.

The generic module mechanical interface attachment apparatus 1010 with lighting module 100 is then fastened to the back plate attachment apparatus 910 with velcro strips 1110 and 1120, as illustrated in Figures 11A and 11B.

To release lighting module 100 from back plate attachment apparatus 910, generic module mechanical interface attachment apparatus 1010 with lighting module 100 is removed from back plate attachment apparatus 910.

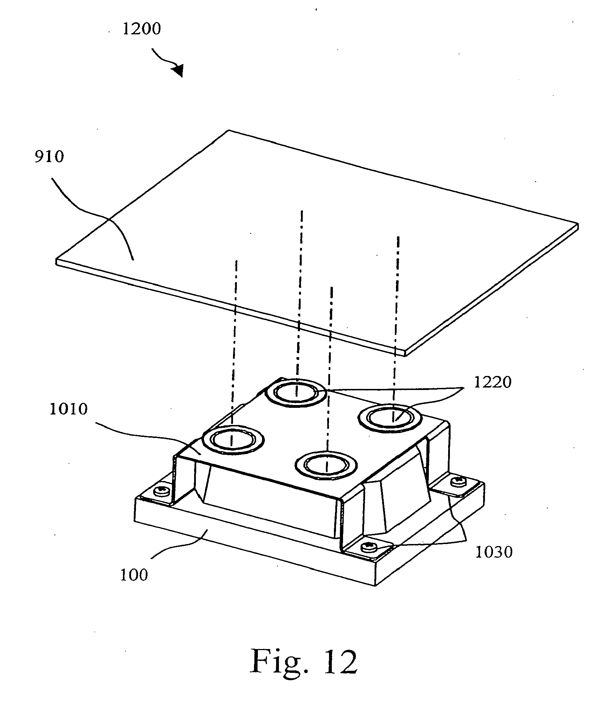

Figure 12 illustrates an exemplary suction cup attachment system 1200 whereby the mechanical mounting interface comprises a back plate attachment apparatus 910, and generic module mechanical interface attachment apparatus 1010 with suction cups 1220 and screws 1030.

The suction cup attachment system 1200 is exemplary and is not limited to four suction cups 1220 and four screws 1030; however, exemplary suction cup attachment system 1200 may have any number of desired suction cups and screws.

In operation, lighting module 100 is fastened to generic module mechanical interface attachment apparatus 1010. The generic module mechanical interface attachment apparatus 1010 with lighting module 100 is then fastened to back plate attachment apparatus 910 with suction cups 1220, as illustrated in figure 12. To release lighting module 100 from back plate attachment apparatus 910, generic module mechanical interface attachment apparatus 1010 with lighting module 100 is removed from back plate attachment apparatus 910.

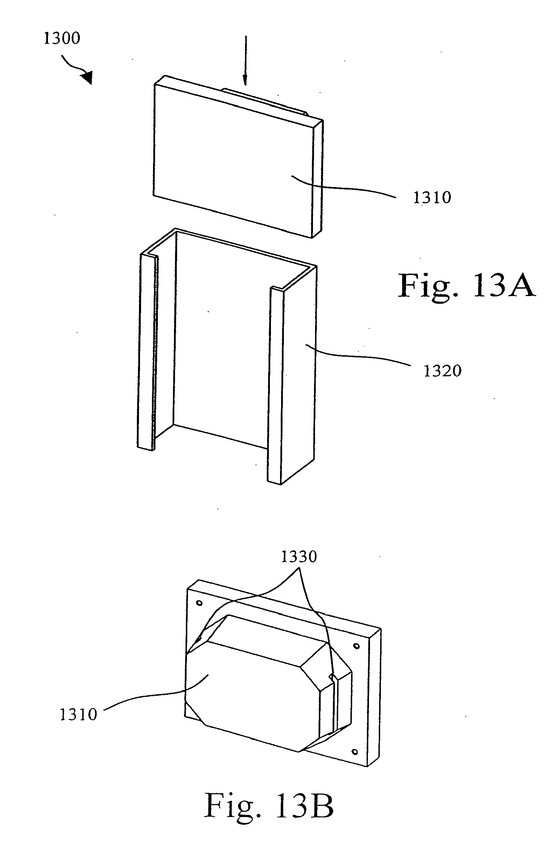

Figure 13A illustrates a front left perspective view of an exemplary standard slide rail attachment system 1300 with a lighting module 1310 and a slide rail 1320.

Said slide rail 1320 having a U-like cross-section whereby two facing rims are provided on the free ends of both legs of said rail 1320.

Figure 13B illustrates a rear left perspective view of lighting module 1310 provided with a mechanical mounting interface comprising two grooves 1330.

Lighting module 1310 is lighting module 100 with two grooves 1330 in the side, as illustrated in figure 13B.

In operation, lighting module 1310 is slid onto slide rail 1320, as illustrated in figure 13A. To release lighting module 1310 from slide rail 1320, mechanical interface attachment apparatus 1010 with lighting module 100 is removed from slide rail 1320. Slide rail 1320 may be any length to accommodate any desired number of lighting modules 1310.

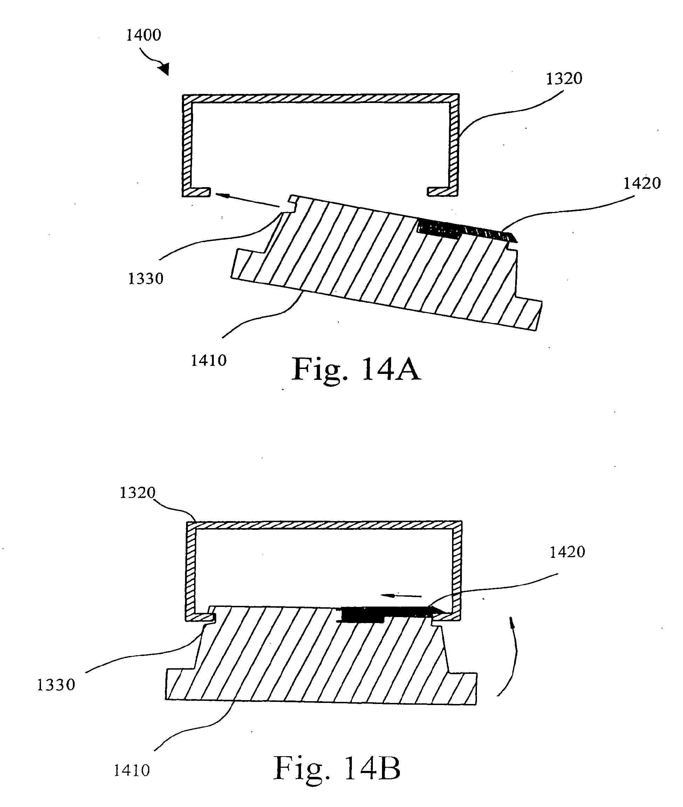

Figure 14A illustrates an exemplary rail mount attachment system 1400 in an open state. Rail mount attachment system 1400 is an alternate embodiment of standard slide rail attachment system 1300. Rail mount attachment system 1400 includes slide rail 1320, groove 1330, and a lighting module 1410 with a retractable latch 1420. Lighting module 1410 is lighting module 100 with two grooves 1330 in the side, as illustrated in figure 13B.

Figure 14B illustrates a rail mount attachment system 1400 in a closed state with slide rail 1320 and lighting module 1410.

In operation, lighting module 1410 is positioned into slide rail 1320, where retractable latch 1420 retracts to allow lighting module 1410 to position into slide rail 1320. Then, retractable latch 1420 extends to fasten lighting module 1410 into slide rail 1320, as illustrated in figure 14A. To release lighting module 1410 from slide rail 1320, the user retracts retractable latch 1420 to allow lighting module 1410 to unfasten from slide rail 1320, as illustrated in figure 14B. Slide rail 1320 may be any length to accommodate any desired number of lighting modules 1410.

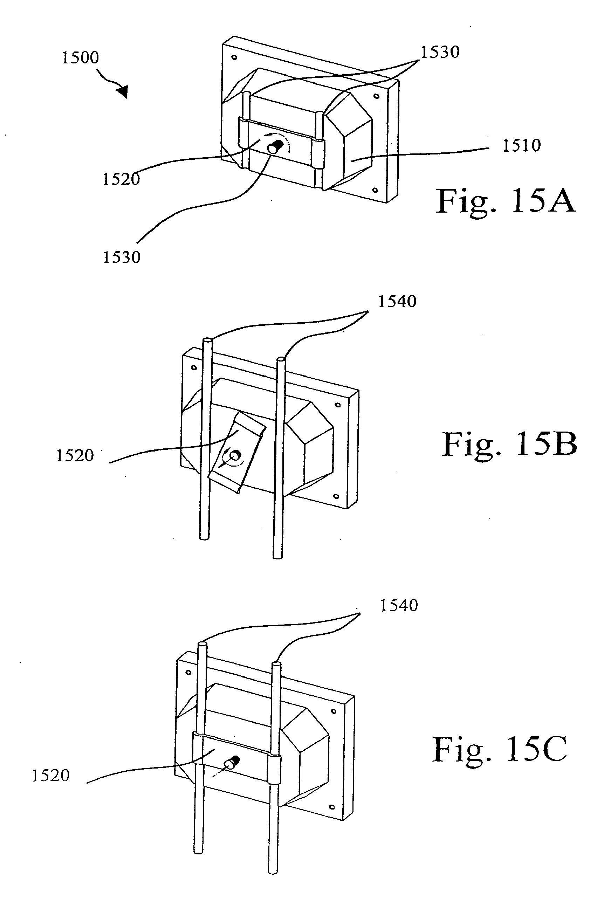

As illustrated in figure 15A the aforementioned display panel can be formed of wires, rods or cables, whereby a mechanical mounting interface consists of a bracket attachment system 1500 comprising grooves 1530, a bracket 1520, and a bracket spring 1530.

Figure 15B illustrates steel wire and bracket attachment system 1500 in an open state with lighting module 1510, bracket 1520, and steel wires 1540.

Figure 15C illustrates steel wire and bracket attachment system 1500 in a closed state with lighting module 1510, bracket 1520, and steel wires 1540.

In operation, lighting module 1510 is attached to the steel wires 1540 by closing bracket 1520 onto steel wires 1540 and turning bracket 1520, as illustrated in Figures 15B and 15C. To release lighting module 1510 from steel wires 1540, bracket 1520 is turned, which allows lighting module 1510 to unfasten from steel wires 1540, as illustrated in figure 15B. Steel wires 1540 may be any length to accommodate any desired number of lighting modules 1510.

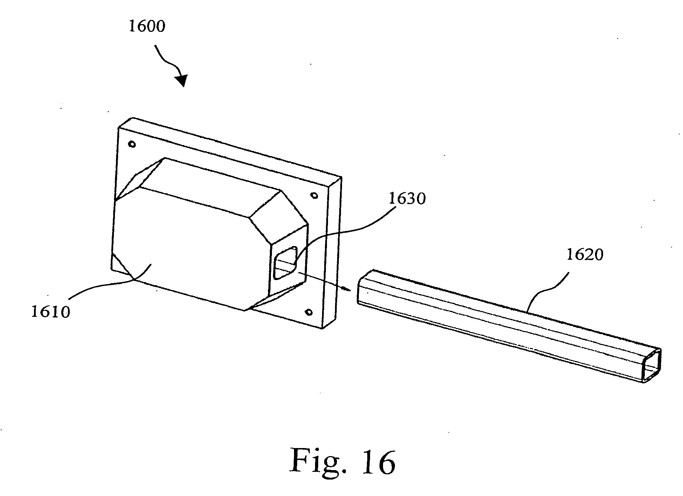

Figure 16 illustrates a display panel in the shape of a bar 1620, which is also called a bar attachment system 1600.

In this case a mechanical mounting interface for fastening a lighting module 1610 to said bar 1620, consists of throughput hole 1630.

Lighting module 1610 can be lighting module 100 with said throughput hole 1630.

In operation, steel bar 1620 is slid into said hole 1630 of lighting module 1610, as illustrated in figure 16. To release lighting module 1610 from steel bar 1620, steel bar 1620 is removed from lighting module 1610, as shown in figure 16. Steel bar 1620 may be any length to accommodate any desired number of lighting modules 1610.

In an alternate embodiment, steel bar 1620 may be cylindrical or any other shape; likewise, throughput hole 1630 would be of a complementary shape.

As a conclusion it is repeated that the present invention relates to a display element as well as to a number of mechanical interfaces for fastening emissive lighting module 100 in display panel slot 210, to create said display element.

Therefore, manufacturing and parts costs are minimized in large-scale display production. Display panel system 200 is designed to be place adjacent to any number of other display panels 200, in order to create a large-scale display (not shown).

The mechanical interfaces include fixed with bolts attachment system 300, standard click-in attachment system 400, click-in with front access attachment system 500, single lever attachment system 600, single lever with front access attachment system 700, push to close - push to open attachment system 800, pin attachment system 900, magnetic attachment system 1000, velcro attachment system 1100, suction cup attachment system 1200, standard slide rail attachment system 1300, rail mount attachment system 1400, steel wire and bracket attachment system 1500, and steel bar attachment system 1600.

Therefore, lighting modules which can be quickly fastened or removed are provided. Display panel system 200 may be formed of only one type of mechanical interface attachment apparatus or may be formed of any number of combinations of mechanical interfaces. Therefore, lighting modules which can be mechanically fastened to a hardware frame by means of a number of different mechanical interfaces provided.

The present invention is by no means limited to the embodiments described above and represented in the accompanying figures, on the contrary a display element and mechanical mounting interface according to the invention can be made according to different variants while still remaining within the scope of the invention.

## Claims

1. A display element consisting of a display panel on which one or more lighting modules are fastened, wherein said display element farther comprises a mechanical mounting interface for fastening said lighting module to said display panel.

2. The display element according to claim 1, wherein said display panel is provided with an array of slots wherein said lighting modules can be.fitted.

3. The display element according to claim 2, wherein said mechanical mounting interface consists of latches that can cooperate by clicking behind the edges of said slots.

4. The display element according to claim 3, wherein said latches are hinge-mounted with one end on said lighting module and wherein they are provided with a rim projecting from said hinge-mounted end.

5. The display element according to claim 4, wherein the lighting module is provided with holes in front of said rims, such that said rims can be accessed through said holes from the front side of said lighting module, in order to unlock said latches.

6. The display element according to claim 4, wherein said mechanical mounting interface comprises a lever that is hinge-mounted on said lighting module and that is provided with a pawl cooperating with said rim.

7. The display element according to claim 6, wherein said lever is hinge-mounted at one edge on said lighting module and wherein said lever is provided with two pawls, one on each end of the hinge-mounted edge of said lever, such that when the lever is lifted, said pawls lift the rims of said latches in order to unlock the lighting module.

8. The display element according to claim 6, wherein said lighting module is provided with a hole in front of said lever, such that said lever can be reached through said hole from the front side of said lighting module.

9. The display element according to claim 3, wherein said latches are bent inwardly towards the lighting module, such that the distance between the hinge-mounted ends of two corresponding latches is larger than the distance between the two corresponding edges of the slots in said display panel cooperating with said latches, and wherein the mechanical mounting interface further comprises at least one spring projecting from the back side of said lighting module and a hinge-mounted lever on said lighting module, such that the free end of the latches can cooperate with said lever, in order to maintain said latches in an inwardly hinged position.

10. The display element according to claim 9, wherein said lighting module can be fastened to said display panel with said mechanical mounting interface, by pushing said lighting module in one of said slots, whereby said latches click with their free ends behind the edges of said slot, and wherein the lighting module can subsequently be released by pushing said lighting element further in said slot, in a direction against the force of the springs, whereby the edges of said slot interact with the curve in said latches, such that the latches are pushed aside, with their free ends under said lever.

11. The display element according to claim 1, wherein said display panel consists of a back plate.

12. The display element according to claim 11, wherein said mechanical mounting interface consists of elements which can cooperate with said back plate by magnetic attraction.

13. The display element according to claim 11, wherein said mechanical mounting interface consists of so-called complementary velcro strips provided on both the lighting module and said back plate.

14. The display element according to claim 11, wherein said mechanical mounting interface consists of suction cups on the lighting module.

15. The display element according to claim 1, wherein said display panel consists of a rail with a U-like cross section and with a rim projecting from both free ends of the legs of said slide rail, said rims being directed to each other, and wherein said mechanical mounting interface comprises two grooves that can cooperate with said rims.

16. The display element according to claim 15, wherein one of the walls of at least one of said grooves consists of a retractable latch.

17. The display element according to claim 1, wherein said display panel consists of one or more wires, cables or rods, and wherein said mechanical mounting interface consists of a bracket attachment system that can cooperate with said one or more wires, cables or rods.

18. The display element according to claim 1, wherein said display panel consists of a bar, and wherein said mechanical mounting interface consists of a bar hole having provided in said lighting module, said bar hole having a cross-section with a shape that is complementary to the shape of the cross-section of said bar.

19. Mechanical mounting interface for fastening a lighting module to a display panel, according to claim 1, wherein said mechanical interface is chosen from a group comprising fixed with bolts attachment system, standard click-in attachment system, click-in with front access attachment system, single lever attachment system, single lever with front access attachment system, push to close - push to open attachment system, pin attachment system, magnetic attachment system, velcro attachment system, suction cup attachment system, standard slide rail attachment system, rail mount attachment system, wire and bracket attachment system 1500, and bar attachment system 1600.
